# EUROPEAN PATENT SPECIFICATION

(11) **EP 2 776 752 B1**
(45) Date of publication and mention of the grant of the patent: **08.06.2016**
(21) Application number: 12788698.4
(22) Date of filing: 08.11.2012
(51) Int. Cl.: F16L 37/133, F16L 37/10

(54) **DEVICE FOR CONNECTING TWO CONDUIT SECTIONS**
VORRICHTUNG ZUM VERBINDEN ZWEIER LEITUNGSABSCHNITTE
DISPOSITIF DE RACCORDEMENT DE DEUX SECTIONS DE CONDUIT

(30) Priority: 10.11.2011 DE 102011118099
(43) Date of publication of application: 17.09.2014
(73) Proprietor: Illinois Tool Works Inc., Glenview, IL 60025 (US)
(72) Inventor: HAPPICH, Johannes, Glenview, Illinois 60026 (US)
(74) Representative: Hauck Patentanwaltspartnerschaft mbB
(86) International application number: PCT/US2012/064079
(87) International publication number: WO 2013/070865

(56) References cited:
- EP-A1- 1 821 022
- DE-A1- 1 912 316
- DE-U1- 20 319 558
- DE-U1-202009 002 464
- DE-U1-202010 009 474
- US-A1- 2008 012 314

## Description

The invention relates to a device for connecting two conduit sections of an automobile conduit, comprising a plug element and a basic body with a receptacle for the plug element. Devices of this kind are used as the coupling element in fluid conduits in an automobile, for example oil conduits. The plug element in this case is connected to one of the two conduit sections and the basic body is connected to the other of the two conduit sections. To make the connection, the plug element is inserted into the receptacle of the basic body, usually by pressing. A tight connection of the conduit sections with one another is thereby achieved. Plug connectors of this kind are standardized by the Society of Automotive Engineers (SAE). The disadvantage of the known devices is that non-destructive disassembly of the plug element from the receptacle for access to the conduit sections is not possible.

From DE 203 19 558 U1 a fluid conduit connector is known with two radially elastic spring arms extending in the direction of connection, which have at their free ends latch projections for engaging in a latching manner behind a latch step of the connector counter piece in the assembled position. A securing element moveable in the axial direction between a starting position which releases the spring arms for a radial latching movement and a securing position which surrounds the spring arms for securing against their latching movement is further provided. From US 2008/0012314 A1 a quick connector coupling is known having a rotatable release member that is moveable between a locked position whereas the quick connector coupling is locked in a coupled state, and a release position whereas the quick connector coupling can be decoupled. A further quick connector is known from DE 20 2009 002 464 U1 comprising a safety device which is moveable between a release position in which an elastic locking arm can be released from a locking engagement and a safety position in which the locking engagement is secured. From EP 1 821 022 A1 a snap fitting quick connector is known with a split ring with locking teeth moveable between an active and a retracted position, wherein the split ring permits to fit a male end of the connector in a female end in the active position and permits to remove the female end from the male end in the retracted position. DE 19 12 316 A1 discloses a connector with an inner coupling part and an outer coupling part, wherein the outer coupling part comprises elastic locking members and a rotatable sleeve that presses the locking members against the inner coupling part. From DE 20 2010 009 474 U1 a connector is known comprising an insertion part and a rotatable part attached to a receiving part, wherein coupling protrusions of the rotatable part interact with depressions of the insertion part.

Starting from the state of the art as described, the problem addressed by the invention is that of providing a device of the kind mentioned above, with which a secure connection can be simply created between two conduit sections of an automobile conduit, wherein simple, non-destructive disassembly of the device should likewise be possible.

The invention solves this problem by means of the subject matter of claim 1. Advantageous embodiments can be found in the dependent claims, the description and the figures.

For a device of the kind mentioned above, the invention solves the problem in that the plug element comprises at least one catch element and that the receptacle comprises at least one catch element corresponding to the catch element of the plug element, wherein the catch elements releasably engage with one other upon insertion of the plug element into the receptacle, and in that a locking mechanism is provided which impedes a release of the engagement of the catch elements in a locking position and which allows a release of the engagement of the catch elements in an unlocking position.

The conduit may be a conduit for a fluid, particularly a fluid for running an automobile. It may be an oil conduit, for example. It is also possible, however, that the conduit is a water or fuel-conducting conduit for the automobile. The plug element has a through-opening for the fluid to be conveyed through the conduit. The basic body likewise has a through-opening for the fluid to be conveyed through the conduit. When the plug element is in a state inserted into the receptacle of the basic body, the through-openings are aligned with one another. The through-openings may have a circular cross section, for example. The receptacle may be formed by an inner wall of the through-opening of the basic body. As mentioned above, the plug element is connectable or connected to the first of the two conduit sections to be connected to one another. The basic body is connectable or connected to the second of the two conduit sections to be connected to one another. A coupling for the two conduit sections to be connected to one another is thereby formed by the device.

According to the invention, when the plug element is inserted into the receptacle, a releasable engagement takes place. By releasing the engagement, the plug element can therefore be advantageously disassembled in a non-destructive manner, so that there is access to the conduit sections connected to one another, for maintenance or repair purposes for example. The catch elements provided according to the invention may particularly be catch recesses and/or catch projections. The plug element and/or the basic body may each comprise one or a plurality of catch elements. Furthermore, a locking mechanism is provided according to the invention, which is adjustable between a locking position and an unlocking position. It is ensured by means of the locking mechanism that the plug element cannot be released from the receptacle in an undesirable manner, accidentally for example, during operation. Instead, the locking element must first be moved into the unlocking position. The plug element can then be disassembled from the receptacle. According to the invention, a secure connection between two conduit sections of an automobile conduit is thereby achieved in an easy-to-assemble manner. At the same time, simple, non-destructive disassembly of the device is likewise possible. An unwanted release of the engagement is reliably impeded by the locking mechanism.

The plug element may be a standard component, apart from the at least one catch element, according to a Society of Automotive Engineers (SAE) standard, for example.

According to one embodiment, the at least one catch element of the plug element may comprise a circumferential groove provided on the outside of the plug element or a circumferential projection provided on the outside of the plug element. The plug element may have a cylindrical outer surface, in which the circumferential groove or on which the circumferential projection is formed. The circumferential projection may be configured as a flange. The at least one catch element of the receptacle comprises at least one catch arm which is elastic at least in the radial direction of the receptacle, on the free end of which a catch projection is provided. The catch arm is particularly securely articulated at its one end. The other end of the catch arm is free and supports a catch projection. A catch hook is thereby formed. The catch projections of the catch arms may then engage in a circumferential groove, for example, or behind a circumferential flange or projection of the plug element. A plurality of such catch arms may be provided. The at least one catch arm is movable at least in a radial direction, in other words perpendicular to the axial direction of the receptacle. The axial direction of the receptacle is particularly defined by the insertion direction of the plug element into the receptacle. It is usually simultaneously the axial direction of the conduit sections to be connected to one another by the device according to the invention, in other words of the flow direction of a fluid through the conduit. The catch projection or projections may extend inwards in a radial direction starting from the catch arm or arms. Furthermore, it may be provided that the at least one catch arm is disposed with its end opposite the free end on a holding ring of the catch element, said holding ring being held on the basic body. The catch arm or arms may in this case be configured integrally with the holding ring.

According to the invention, the locking mechanism comprises a locking sleeve disposed on the basic body and being rotatable between the unlocking position and the locking position. The locking sleeve may impede an outward movement of the at least one catch arm at least in a radial direction. A particularly simple realization of the lock is thereby achieved. The locking sleeve may be slipped onto the basic body. In particular, it may also be slipped onto the holding ring and/or the at least one catch arm of the catch element of the receptacle. By simply turning the locking sleeve, whether manually or by means of a tool, the plug element can then be locked and unlocked in the receptacle.

Furthermore, it may be provided that the locking sleeve possesses an inner radius which changes in the circumferential direction, wherein in the locking position at least one section with a smaller inner radius is located in a radial direction above the catch projection, in other words, outside the catch projection, of the at least one catch arm, so that the at least one catch arm cannot move outwards in a radial direction and wherein in the unlocking position at least one section with a larger inner radius is located in a radial direction above the catch projection of the at least one catch arm, so that the at least one catch arm can move outwards in a radial direction to release the engagement of the plug element in the receptacle. The change in the inner radius in this case may particularly be in a (first) axial section of the locking sleeve. This axial section is particularly the axial section in which the catch projections are also disposed when the device is in the assembled state. The inner radius may regularly change over the circumference, for example. The change may be continuous in each case, so that graduations can be avoided and rotation of the locking sleeve simplified. In particular, hill-like elevations may for example be provided on the inner surface of the locking sleeve, in a number and position corresponding to the number and position over the circumference of the basic body or the receptacle of the catch arms and catch projections provided. If, for example, four catch projections and catch arms evenly distributed over the circumference of the receptacle are provided, four projections likewise evenly distributed over the circumference of the inner surface of the locking sleeve may be correspondingly provided. By rotating the locking sleeve, the elevations can likewise be moved into a position above the catch projections, so that the catch arms and with them the catch projections cannot be moved outwards in a radial direction. The engagement of the plug element in the receptacle is therefore prevented from releasing. To release the engagement, the locking sleeve must first be turned until the sections with a larger inner diameter are each above the catch projections in a radial direction. The catch projections can then spring outwards with the catch arms, so that the engagement of the plug element can be released. Furthermore, the locking sleeve may exhibit at least one receptacle for the at least one catch projection on its.inner surface close to the at least one section with a larger inner diameter.

The at least one catch element of the receptacle furthermore comprises at least one safety arm being elastic at least in a radial direction of the receptacle, on the free end of which a safety projection is provided, wherein the at least one safety projection is offset in an axial direction with regard to the at least one locking projection of the locking element of the receptacle. The at least one safety arm may be disposed with its end opposite the free end likewise on the holding ring held on the basic body. The safety arms along with the safety projections form safety hooks. The safety arms may be of a different length to the catch arms in this case, for example they may be shorter. In this way it can be achieved, with the same starting point on the holding ring, that the catch projections are arranged on a different axial plane to the safety projections. Moreover, a plurality of such safety arms may be provided. While the catch projection or projections may extend inwards in a radial direction starting from the catch arm or arms, it is possible for the safety projection or projections to extend outwards in a radial direction from the safety arm or safety arms.

The locking sleeve exhibits at least one through-opening into which at least one safety projection enters in the locking position of the locking sleeve, so that a rotation of the locking sleeve out of its locking position into its unlocking position is impeded. The safety projections in this case are spring-preloaded, such that they automatically enter the through-opening and remain therein when the locking sleeve is located in the locking position. A rotation of the locking sleeve out of its locking position into its unlocking position is only possible if beforehand the safety projection or projections is/are pressed against their spring-preloading from the outside through the through-hole out of said through-hole inwards in a radial direction. This requires a special disassembly tool, a suitable pair of pliers for example, so that the plug element cannot be released from the receptacle during operation in an unwanted fashion. It is possible that a corresponding through-opening is not provided for all safety projections. In this way, the disassembly tool need not press all safety projections inward. The engagement of the tool and therefore the disassembly are thereby simplified.

The plug element and/or the basic body and/or the catch elements may be made of a plastic. This is particularly simple from a manufacturing point of view. Moreover, this makes the components particularly light and inexpensive. The releasable engagement according to the invention means that a plastics material of this kind is possible for the present application.

The basic body and the catch element of the receptacle may be formed by a common component, in other words integrally formed. It is also possible, however, for the basic body and the catch element to be separate components. It is then further advantageously possible for the basic body to be made of a harder material than the at least one catch element of the receptacle. On the one hand, a high degree of stability is thereby achieved through the hard basic body. At the same time, simple assembly and disassembly is achieved through the softer catch element.

An exemplary embodiment of the invention is explained in greater detail below with the help of figures. These show in schematic form:
- Fig. 1: a device according to the invention in the assembled state in side view,
- Fig. 2: the device from Fig. 1 in a longitudinal sectional view,
- Fig. 3: the catch element of the receptacle of the device according to the invention shown in Fig. 2 in a perspective view,
- Fig. 4: a section along line D-D in Fig. 1 in a first operating position,
- Fig. 5: a section along line D-D in Fig. 1 in a second operating position and
- Fig. 6: a section along line C-C in Fig. 1.

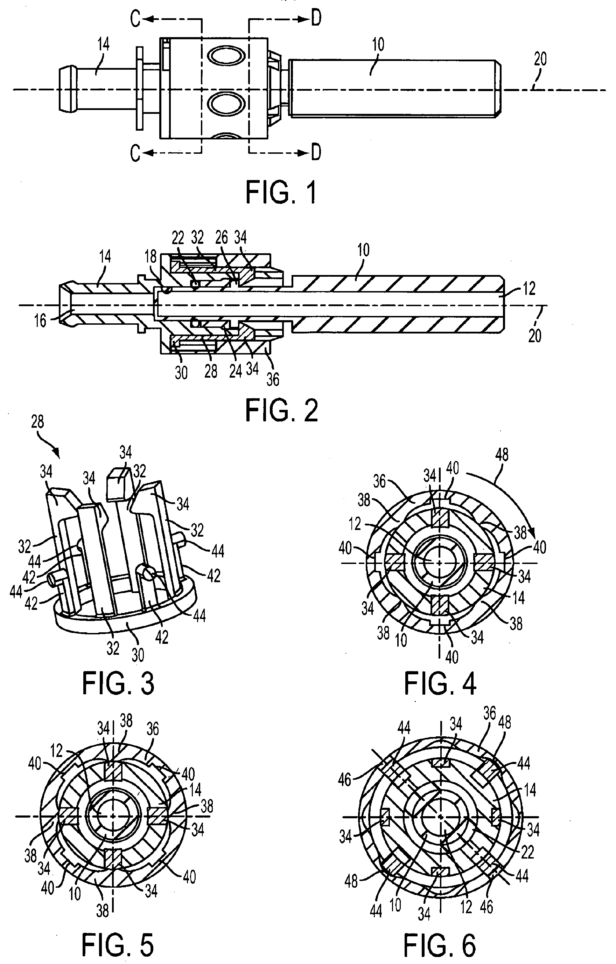

Unless otherwise indicated, the same reference numbers in the figures denote the same items. The device according to the invention shown in Fig. 1 is used to connect two conduit sections which are not shown of a fluid conduit of an automobile, for example an oil conduit. It comprises a plug element 10 which, as can be seen particularly in Fig. 2, comprises two hollow-cylindrical sections having different outer diameters. The plug element 10 delimits a cylindrical through-opening 12 with a uniform diameter for the fluid to be conducted through the automobile conduit. The device further comprises a basic body 14, which likewise delimits a through-opening 16 with a circular cross section for the fluid to be conducted through the conduit. The plug element 10 is inserted into a receptacle 18 formed by the through-opening 16 with its section having the reduced outer diameter, as can be particularly seen in Fig. 2. During operation the plug element 10 is connected to a first of the two conduit sections and the basic body 14 to a second of the two conduit sections. The fluid flows through the conduit sections and the through-openings 12, 16 of the device along the axial direction shown in Figures 1 and 2 with the reference number 20. Reference number 22 in Fig. 2 denotes a sealing ring, in this case an O-ring, which seals the connection between the conduit sections made by the device according to the invention. A clamping ring 24 is secured to the inside of the basic body 14, which ensures that the sealing ring 22 is held on the basic body 14 before the plug element 10 is inserted into the receptacle 18 of the sealing ring 22.

It can be seen particularly in Fig. 2 that the plug element 10 comprises a flange 26 running in the circumferential direction as the catch element on its section disposed within the receptacle 18. A corresponding catch element 28 is disposed on the basic body 14, said catch element being shown in Fig. 3 in a perspective view. The catch element 28 comprises a holding ring 30, with which it is pushed onto the basic body 14, as can be seen in Fig. 2. Starting from the holding ring 30, four elastic catch arms 32 extend in the example shown, on the free end of which a catch projection 34 disposed inwardly in a radial direction is configured in each case. Four engaging hooks are thereby formed distributed at even intervals around the circumference of the holding ring 30. When the plug element 10 is inserted into the receptacle 18, the catch projections 34 and with them the catch arms 32 are initially pressed outwards in a radial direction by the circumferential flange 26 of the plug element 10 until they engage behind the circumferential flange 26, as shown in Fig. 2. For disassembly, it is possible in this case to pull the plug element 10 out of the receptacle 18 again, wherein the catch projections 34 and with them the catch arms 32 are pressed outwards again in a radial direction until the circumferential flange 26 slips past the catch projections 34.

The assembly and disassembly of the plug element 10 described above is, however, only possible if a locking mechanism of the device according to the invention is in an unlocking position. In the example shown, the locking mechanism comprises a locking sleeve 36 slipped onto the basic body 14 and the catch element 28. The embodiment and function of the locking sleeve 36 is to be explained in greater detail with reference to Figures 4 and 5. It can be seen here that the locking sleeve 36 exhibits an inner diameter that changes in the circumferential direction. The locking sleeve 36 is particularly provided on its inner side with four hill-like elevations 38 which are evenly distributed over the circumference. Between the elevations 38 in each case are likewise four receptacles 40 evenly distributed over the inner circumference of the locking sleeve 36. The unlocking position of the locking sleeve 36 is shown in Fig. 4. It can be seen that in this position the receptacles 40 each lie in a radial direction above or outside the catch projections 34. The catch projections 34 and with them the catch arms 32 can move outwards in this unlocking position, in a radial direction in other words, particularly for assembly and disassembly of the plug element 10. To achieve the locking position, the locking sleeve 36 is rotated out of the position show in Fig. 4 along the arrow 48 into the locking position shown in Fig. 5. In this locking position the elevations 38 of the locking sleeve 36 are located above or outside the catch projections 34 in a radial direction. The catch projections 34 cannot therefore be moved outwards in a radial direction in this state. Releasing the engagement of the plug element 10 at the catch projections 34 is not therefore possible, so that a disassembly of the plug element 10 in this state is not possible either.

A safety function of the device according to the invention impeding accidental movement of the locking sleeve 36 into the unlocking position is to be explained using the section along line C-C in Fig. 1 shown in Fig. 6. For this purpose, reference is initially made once again to Fig. 3. It is possible to see here that apart from the catch arms 32, the catch element 28 also exhibits four elastic safety arms 42 disposed between two catch arms 32 in each case extending at even intervals on the circumference from the holding ring 30. At their free end, a safety projection 44 is configured on each of the safety arms 42. The safety projections 44 extend in the example shown outwards in a radial direction. In Fig. 6, in which the locking sleeve 36 is located in its locking position, it can be seen that said sleeve exhibits two diametrically opposite through-openings 46 on the axial plane shown there. Moreover, it exhibits two protrusions 48 on its inner surface, likewise diametrically opposite one another. The through-openings 46 and the protrusions 48 are evenly distributed over the inner circumference of the locking sleeve 36 and, as can be seen in Fig. 6, arranged in the locking position in a radial direction above or outside a safety projection 44 in each case. In particular, the safety projections 44 located below or within the through-openings 46 in a radial direction have entered the through-openings 46 due to the spring-preloading of the safety arms 42. This means that a rotation of the locking sleeve 36 out of the locking position shown in Fig. 6 is no longer possible. Instead, a special tool is required for this, a pair of pliers for example, which initially presses the safety projections 44 against their spring-preloading inwards in a radial direction from the through-openings 46.

It should also be pointed out that a small number or all components of the device according to the invention may be made of a plastics material. Moreover, it should be pointed out that the catch element 28 in the example shown is configured as a single piece and may particularly be made of a softer material than the basic body 14 likewise configured as a single piece.

## Claims

1. A device for connecting two conduit sections of a conduit of an automobile, comprising a plug element (10) and a basic body (14) with a receptacle (18) for the plug element (10), wherein the plug element (10) comprises at least one catch element (26) and wherein the receptacle (18) comprises at least one catch element (28) corresponding to the catch element (26) of the plug element (10), wherein the catch elements (26, 28) releasably engage with each other upon insertion of the plug element (10) into the receptacle (18), and wherein a locking device is provided which impedes a release of the engagement of the catch elements (26, 28) in a locking position and which allows a release of the engagement of the catch elements (26, 28) in an unlocking position, wherein the at least one catch element (28) of the receptacle (18) comprises at least one catch arm (32) which is elastic at least in the radial direction of the receptacle (18), wherein a catch projection (34) is provided on the free end of the catch arm, wherein the locking device comprises a locking sleeve (36) provided on the basic body (14) and being rotatable between the unlocking position and the locking position, **characterized in that** the at least one catch element (28) of the receptacle (18) further comprises a safety arm (42) being elastic at least in the radial direction of the receptacle (18), wherein on the free end of the safety arm a safety projection (44) is provided, wherein the at least one safety projection (44) is offset in the axial direction with regard to the at least one catch projection (34) of the catch element (28) of the receptacle (18), wherein the locking sleeve (36) comprises at least one through-opening (46) into which at least one safety projection (44) enters in the locking position of the locking sleeve (36), so that a rotation of the locking sleeve (36) from its locking position into its unlocking position is impeded.

2. The device as claimed in claim 1, **characterized in that** the at least one catch element (26) of the plug element (10) is a circumferential groove provided on the outside of the plug element (10) or a circumferential projection (26) provided on the outside of the plug element (10).

3. The device as claimed in one of claims 1 or 2, **characterized in that** the at least one catch arm (32) is provided on a holding ring (30) of the catch element (28) with its end opposite the free end, wherein the holding ring (30) is held on the basic body (14).

4. The device as claimed in one of the preceding claims, **characterized in that** in the locking position the locking sleeve (36) impedes a movement of the at least one catch arm (32) at least in the radial direction to the outside.

5. The device as claimed in claim 4, **characterized in that** the locking sleeve (36) comprises an inner radius which changes in the circumferential direction, wherein in the locking position at least one section with a smaller inner radius is located in the radial direction above the catch projection (34) of the at least one catch arm (32), so that the at least one catch arm (32) cannot move in the radial direction to the outside and, wherein in the unlocking position at least one section with a larger inner radius is located in the radial direction above the catch projection (34) of the at least one catch arm (32), so that the at least one catch arm (32) can move in the radial direction to the outside for releasing the engagement of the plug element (10) in the receptacle (18).

6. The device as claimed in one of the preceding claims, **characterized in that** the locking sleeve (36) comprises at least one receptacle (40) for the at least one catch projection (34) on its inner surface in the area of the at least one section with a larger inner radius.

7. The device as claimed in one of the preceding claims, **characterized in that** the at least one safety arm (42) is also provided on the holding ring (30) being held on the basic body (14), with its end opposite the free end.

8. The device as claimed in one of the preceding claims, **characterized in that** the plug element (10) and/or the basic body (14) and/or the catch elements (26, 28) consist of a plastic material.

9. The device as claimed in one of the preceding claims, **characterized in that** the basic body (14) consists of a harder material than the at least one catch element (28) of the receptacle (18).

## Patentansprüche

1. Vorrichtung zum Verbinden zweier Leitungsabschnitte einer Leitung eines Automobils, umfassend ein Steckelement (10) und einen Grundkörper (14) mit einer Aufnahme (18) für das Steckelement (10), wobei das Steckelement (10) mindestens ein Rastelement (26) aufweist und die Aufnahme (18) mindestens ein zu dem Rastelement (26) des Steckelements (10) korrespondierendes Rastelement (28) aufweist, wobei die Rastelemente (26, 28) beim Einsetzen des Steckelements (10) in die Aufnahme (18) lösbar miteinander verrasten, und wobei eine Verriegelungseinrichtung vorgesehen ist, die in einer Verriegelungsposition ein Lösen der Verrastung der Rastelemente (26, 28) unterbindet und die in einer Entriegelungsposition ein Lösen der Verrastung der Rastelemente (26, 28) ermöglicht, wobei das mindestens eine Rastelement (28) der Aufnahme (18) mindestens einen zumindest in Radialrichtung der Aufnahme (18) elastischen Rastarm (32) aufweist, wobei am freien Ende des Rastarms ein Rastvorsprung (34) ausgebildet ist, wobie die Verriegelungseinrichtung eine auf dem Grundkörper (14) angeordnete, zwischen der Entriegelungsposition und der Verriegelungsposition drehbar gelagerte Verriegelungshülse (36) umfasst, **dadurch gekennzeichnet, dass** das mindestens eine Rastelement (28) der Aufnahme (18) weiterhin einen zumindest in Radialrichtung der Aufnahme (18) elastischen Sicherungsarm (42) aufweist, wobei am freien Ende des Sicherungsarms ein Sicherungsvorsprung (44) ausgebildet ist, wobei der mindestens eine Sicherungsvorsprung (44) in Axialrichtung versetzt zu dem mindestens einen Rastvorsprung (34) des Rastelements (28) der Aufnahme (18) angeordnet ist, wobei die Verriegelungshülse (36) mindestens eine Durchgangsöffnung (46) aufweist, in die in der Verriegelungsposition der Verriegelungshülse (36) mindestens ein Sicherungsvorsprung (44) eintritt, so dass eine Drehung der Verriegelungshülse (36) aus ihrer Verriegelungsposition in ihre Entriegelungsposition verhindert wird.

2. Vorrichtung nach Anspruch 1, **dadurch gekennzeichnet, dass** das mindestens eine Rastelement (26) des Steckelements (10) eine an der Außenseite des Steckelements (10) ausgebildete Umfangsnut oder einen an der Außenseite des Steckelements (10) ausgebildeten Umfangsvorsprung (26) umfasst.

3. Vorrichtung nach einem der Ansprüche 1 oder 2, **dadurch gekennzeichnet, dass** der mindestens eine Rastarm (32) mit seinem dem freien Ende gegenüberliegenden Ende an einem Haltering (30) des Rastelements (28) angeordnet ist, wobei der Haltering (30) auf dem Grundkörper (14) gehalten ist.

4. Vorrichtung nach einem der vorhergehenden Ansprüche, **dadurch gekennzeichnet, dass** die Verriegelungshülse (36) in der Verriegelungsposition eine Bewegung des mindestens einen Rastarms (32) zumindest in Radialrichtung nach außen verhindert.

5. Vorrichtung nach Anspruch 4, **dadurch gekennzeichnet, dass** die Verriegelungshülse (36) einen sich in Umfangsrichtung ändernden Innenradius besitzt, wobei sich in der Verriegelungsposition mindestens ein Abschnitt mit einem geringeren Innenradius in Radialrichtung über dem Rastvorsprung (34) des mindestens einen Rastarms (32) befindet, so dass der mindestens eine Rastarm (32) sich nicht in Radialrichtung nach außen bewegen kann und, wobei sich in der Entriegelungsposition mindestens ein Abschnitt mit einem größeren Innenradius in Radialrichtung über dem Rastvorsprung (34) des mindestens einen Rastarms (32) befindet, so dass der mindestens eine Rastarm (32) sich in Radialrichtung nach außen bewegen kann zum Lösen der Verrastung des Steckelements (10) in der Aufnahme (18).

6. Vorrichtung nach einem der vorhergehenden Ansprüche, **dadurch gekennzeichnet, dass** die Verriegelungshülse (36) an ihrer Innenfläche im Bereich des mindestens einen Abschnitts mit größerem Innenradius mindestens eine Aufnahme (40) für den mindestens einen Rastvorsprung (34) aufweist.

7. Vorrichtung nach einem der vorhergehenden Ansprüche, **dadurch gekennzeichnet, dass** der mindestens eine Sicherungsarm (42) mit seinem dem freien Ende gegenüberliegenden Ende ebenfalls an dem auf dem Grundkörper (14) gehaltenen Haltering (30) angeordnet ist.

8. Vorrichtung nach einem der vorhergehenden Ansprüche, **dadurch gekennzeichnet, dass** das Steckelement (10) und/oder der Grundkörper (14) und/oder die Rastelemente (26, 28) aus einem Kunststoff bestehen.

9. Vorrichtung nach einem der vorhergehenden Ansprüche, **dadurch gekennzeichnet, dass** der Grundkörper (14) aus einem härteren Material besteht als das mindestens eine Rastelement (28) der Aufnahme (18).

## Revendications

1. Dispositif de raccordement de deux sections de conduit d'un conduit d'une automobile, comprenant un élément mâle (10) et un corps de base (14) comportant un réceptacle (18) pour l'élément mâle (10), l'élément mâle (10) comprenant au moins un élément d'arrêt (26) et le réceptacle (18) comprenant au moins un élément d'arrêt (28) correspondant à l'élément d'arrêt (26) de l'élément mâle (10), les éléments d'arrêt (26, 28) s'accouplant l'un avec l'autre de manière libérable lors de l'insertion de l'élément mâle (10) dans le réceptacle (18), et un dispositif de verrouillage étant prévu, celui-ci empêchant une libération de l'accouplement des éléments d'arrêt (26, 28) dans une position de verrouillage et permettant une libération de l'accouplement des éléments d'arrêt (26, 28) dans une position de déverrouillage, le ou les éléments d'arrêt (28) du réceptacle (18) comprenant au moins une patte d'arrêt (32) qui est élastique au moins dans la direction radiale du réceptacle (18), une saillie d'arrêt (34) étant prévue sur l'extrémité libre de la patte d'arrêt, le dispositif de verrouillage comprenant un manchon de verrouillage (36) prévu sur le corps de base (14) et pouvant tourner entre la position de déverrouillage et la position de verrouillage, **caractérisé en ce que** le ou les éléments d'arrêt (28) du réceptacle (18) comprennent en outre une patte de sécurité (42) qui est élastique au moins dans la direction radiale du réceptacle (18), une saillie de sécurité (44) étant prévue sur l'extrémité libre de la patte de sécurité, la ou les saillies de sécurité (44) étant décalées dans la direction axiale par rapport à la ou aux saillies d'arrêt (34) de l'élément d'arrêt (28) du réceptacle (18), le dispositif de verrouillage (36) comprenant au moins une ouverture traversante (46) dans laquelle pénètre au moins une saillie de sécurité (44) dans la position de verrouillage du manchon de verrouillage (36), de telle sorte qu'une rotation du manchon de verrouillage (36) de sa position de verrouillage à sa position de déverrouillage soit bloquée.

2. Dispositif selon la revendication 1, **caractérisé en ce que** le ou les éléments d'arrêt (26) de l'élément mâle (10) sont des rainures circonférentielles prévues sur l'extérieur de l'élément mâle (10) ou des saillies circonférentielles (26) prévues sur l'extérieur de l'élément mâle (10).

3. Dispositif selon l'une des revendications 1 et 2, **caractérisé en ce que** la ou les pattes d'arrêt (32) sont placées sur une bague de support (30) de l'élément d'arrêt (28) par le biais de leur extrémité opposée à l'extrémité libre, la bague de support (30) étant supportée par le corps de base (14) .

4. Dispositif selon l'une des revendications précédentes, **caractérisé en ce que**, dans la position de verrouillage, le manchon de verrouillage (36) bloque un déplacement de la ou des pattes d'arrêt (32) au moins dans la direction radiale vers l'extérieur.

5. Dispositif selon la revendication 4, **caractérisé en ce que** le manchon de verrouillage (36) comprend un rayon intérieur qui varie dans la direction circonférentielle, au moins une section présentant un rayon intérieur inférieur étant, dans la position de verrouillage, située au-dessus, dans la direction radiale, de la saillie d'arrêt (34) de la ou des pattes d'arrêt (32), de telle sorte que la ou les pattes d'arrêt (32) ne puissent pas se déplacer dans la direction radiale vers l'extérieur, et au moins une section présentant un rayon intérieur supérieur étant, dans la position de déverrouillage, située au-dessus, dans la direction radiale, de la saillie d'arrêt (34) de la ou des pattes d'arrêt (32), de telle sorte que la ou les pattes d'arrêt (32) puissent se déplacer dans la direction radiale vers l'extérieur afin de libérer l'accouplement de l'élément mâle (10) avec le réceptacle (18).

6. Dispositif selon l'une des revendications précédentes, **caractérisé en ce que** le manchon de verrouillage (36) comprend au moins un réceptacle (40) pour la ou les saillies d'arrêt (34) sur sa surface intérieure dans la région de la ou des sections présentant un rayon intérieur supérieur.

7. Dispositif selon l'une des revendications précédentes, **caractérisé en ce que** la ou les pattes de sécurité (42) sont également placées sur la bague de support (30) supportée par le corps de base (14), par le biais de leur extrémité opposée à l'extrémité libre.

8. Dispositif selon l'une des revendications précédentes, **caractérisé en ce que** l'élément mâle (10) et/ou le corps de base (14) et/ou les éléments d'arrêt (26, 28) sont constitués de matière plastique.

9. Dispositif selon l'une des revendications précédentes, **caractérisé en ce que** le corps de base (14) est constitué d'un matériau plus dur que celui du ou des éléments d'arrêt (28) du réceptacle (18).
